Europäisches Patentamt

European Patent Office

Office européen des brevets

(19)

(11) **EP 0 929 589 B1**

(12) **EUROPÄISCHE PATENTSCHRIFT**

(45) Veröffentlichungstag und Bekanntmachung des Hinweises auf die Patenterteilung:
**21.03.2001 Patentblatt 2001/12**

(51) Int Cl.7: **C08G 18/82**, C08J 3/09, A61L 27/00

(21) Anmeldenummer: **97909284.8**

(86) Internationale Anmeldenummer:
**PCT/EP97/05110**

(22) Anmeldetag: **18.09.1997**

(87) Internationale Veröffentlichungsnummer:
**WO 98/14496 (09.04.1998 Gazette 1998/14)**

(54) **VERWENDUNG BIOKOMPATIBLER THERMOPLASTISCHER POLYURETHANE**

USE OF BIOCOMPATIBLE THERMOPLASTIC POLYURETHANES

UTILISATION DE POLYURETHANNES THERMOPLASTIQUES BIOCOMPATIBLES

(84) Benannte Vertragsstaaten:
**AT BE DE DK ES FR GB IE IT NL SE**

(30) Priorität: **01.10.1996 DE 19640552**

(43) Veröffentlichungstag der Anmeldung:
**21.07.1999 Patentblatt 1999/29**

(73) Patentinhaber: **BAYER AG**
**51368 Leverkusen (DE)**

(72) Erfinder:
• **PUDLEINER, Heinz**
**D-47800 Krefeld (DE)**
• **DUJARDIN, Ralf**
**D-47877 Willich (DE)**

(56) Entgegenhaltungen:
**EP-A- 0 418 631**      **EP-A- 0 461 375**
**DE-A- 3 239 318**      **FR-A- 2 546 170**

## Beschreibung

Die Erfindung betrifft die Verwendung zell- und gewebeverträglicher thermoplastischer Polyurethane zur Herstellung medizinischer Artikel.

Kunststoffe, die zum Einsatz in medizinischen Artikeln, die mit Körperflüssigkeiten oder -gewebe in Kontakt kommen, müssen eine gute biologische Verträglichkeit aufweisen, insbesondere wenn der Kontakt über längere Zeit erfolgt, z. B. bei Implantaten. Es wurde schon verschiedentlich vorgeschlagen, für diesen Anwendungsbereich thermoplastische Polyurethane (TPU) einzusetzen. So gehen aus DE-OS 32 39 318, US-A 4 523 005, US-A 4 447 590 und WO 92/04390 biologisch verträgliche TPU hervor, die vielen Ansprüchen bereits genügen.

Die als biokompatibel bezeichneten TPU des Standes der Technik weisen jedoch noch eine Reihe von Nachteilen auf. So lassen durch hydrolytische Einflüsse nach einiger Zeit Festigkeit und Elastizität der Kunststoffe nach, einige TPU werden sogar vollständig abgebaut. Häufig wirken die Materialien bei einem bis zu 30 Tagen dauernden Einsatz im oder am Körper zell- oder gewebetoxisch. Für medizinische Materialien, die in direktem Kontakt mit dem Blut stehen, z.B. künstlichen Organen, künstlichen Blutgefäßen, Transfusionseinrichtungen oder Kathetern, ist zudem eine besonders gute Blutverträglichkeit erforderlich.

Es besteht daher ein Bedarf nach Materialien, die den TPU des Standes der Technik hinsichtlich Zell-, Blut- und Gewebeverträglichkeit überlegen sind und sich insbesondere für die Herstellung von medizinischen Artikeln wie Katheterschläuchen, Kunststoffrahmen für Herzklappen und weiteren im Kontakt mit Blut oder anderen Körperflüssigkeiten stehenden medizinischen Formkörpern eignen.

In EP-A-0 418 631 wird ein Verfahren zur Herstellung von Polyester(urethan)diolen beschrieben, bei dem Polyesterdiole in einem Gemisch aus unpolarem und polarem Lösungsmittel mit einem Diisocyanat umgesetzt werden, die beiden Phasen voneinander getrennt werden bzw. bei Ausbleiben einer Phasentrennung mit einem unpolaren Lösungsmittel extrahiert wird, das Raffinat abgetrennt wird und aus der polaren Phase das Polyester(urethan)diol abgetrennt wird. Man erhält Polyester(urethan)diole mit erhöhter Einheitlichkeit, die als Makrodiole bei der Synthese von segmentierten Polyurethan(harnstoff)-Elastomeren eingesetzt werden.

Es wurde nun gefunden, daß man durch Verbesserung der Biokompatibilität herkömmlicher thermoplastischer Polyurethane zu biologisch verträglichen Materialien gelangen kann.

Gegenstand der Erfindung ist die Verwendung von biologisch verträglichen thermoplastischen Polyurethanen, die durch im Prinzip bekannte Verfahren hergestellt und einer Extraktion mit einem organischen Lösungsmittel mit anschließender Abtrennung und Entfernung des Lösungsmittels unterzogen worden sind, zur Herstellung medizinischer Artikel, z.B. von Kathetern, Schläuchen, Blutbeuteln, Folien oder Formkörpern für Implantate.

Dazu werden die nach im Prinzip bekannten Methoden hergestellten, bevorzugt aliphatischen TPU in einer geeigneten Extraktionsapparatur, z. B. einer Soxhlet-Apparatur, mit einem organischen Lösungsmittel extrahiert. Das Polymer kann hierzu beispielsweise in Form von geschnittenen bzw. gehäckselten Platten, Formkörpern oder Polymergranulat eingesetzt werden; bevorzugt wird Polymergranulat eingesetzt. Als Lösungsmittel können niedermolekulare Alkohole, Glykole, aromatische Kohlenwasserstoffe, halogenierte Kohlenwasserstoffe, aliphatische oder cycloaliphatische Ketone verwendet werden. Bevorzugt werden Ethanol oder Aceton verwendet, besonders bevorzugt Aceton. Je nach Quell- und Lösungsverhalten des eingesetzten Extraktionsmittels beträgt die Extraktionszeit von 1 bis 48 Stunden, bevorzugt von 2 bis 36 Stunden, besonders bevorzugt von 12 bis 24 Stunden. Die Extraktion findet bei der Siedetemperatur des eingesetzten Lösungsmittels statt, die jedoch nicht mehr als 100°C betragen sollte, um ein Anschmelzen des Polymeren zu vermeiden.

Nach der Extraktion wird das Polymer abgetrennt und von Lösungsmittelresten befreit. Dies geschieht bevorzugt durch Trocknen unter vermindertem Druck, damit sichergestellt ist, daß auch im Polymer gebundene Lösungsmittelreste vollständig entfernt werden.

Durch das Verfahren wird ein Material mit deutlich verbesserter biologischer Verträglichkeit erhalten. Obwohl durch die Extraktion die Konzentration der als Katalysator verwendeten organischen Zinnverbindungen im Polymer kaum verändert wird, ist das Polymer nach der Extraktion besser zellverträglich; die aus dem Extrakt gewonnenen Rückstände wirken dagegen zelltoxisch.

Als Ausgangsstoffe für das erfindungsgemäße Verfahren eignen sich die im Prinzip bekannten TPU auf der Basis von Diisocyanaten, Makrodiolen und niedermolekularen Kettenverlängerern; bevorzugt werden aliphatische TPU eingesetzt.

Als Beispiele für zur Herstellung der erfindungsgemäß einsetzbaren TPU geeignete Diisocyanate seien genannt: aliphatische Diisocyanate, wie Hexamethylendiisocyanat (HDI), cycloaliphatische Diisocyanate, wie Isophorondiisocyanat (IPDI), 1,4-Cyclohexan-diisocyanat (CHDI), 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat ($H_{12}$-MDI), 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4''-triisocyanat oder Polyphenyl-polymethylen-polyisocyanaten.

Als Makrodiole werden lineare hydroxylterminierte Polyole mit einem mittleren Molekulargewicht $\overline{M}_n$ von 500 bis 10000, bevorzugt 500 bis 5000, besonders bevorzugt 600 bis 2000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole, hydroxylterminierte Polybutadiene, hydroxylterminierte Polysiloxane oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyldiethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, daß ein thermoplastisch verarbeitbares Produkt entsteht. Die im wesentlichen linearen Polyether-Diole können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole können einzeln oder in Form von Mischungen untereinander zur Anwendung kommen.

Als Kettenverlängerungsmittel werden Diole, Diamine oder Aminoalkohole mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di-(-hydroxyethyl)-hydrochinon, ethoxylierte Bisphenole, (cyclo)aliphatische Diamine, wie z.B. Isophorondiamin, Ethylendiamin, 1,2-Propylen-diamin, 1,3-Propylen-diamin, N-Methyl-propylen-1,3-diamin, 1,6-Hexamethylendiamin, 1,4-Diaminocyclohexan, 1,3-Diaminocyclohexan, N,N'-Dimethyl-ethylendiamin und 4,4'-Dicyclohexylmethandiamin und aromatische Diamine, wie z.B. 2,4-Toluylen-diamin und 2,6-Toluylen-diamin, 3,5-Diethyl-2,4-toluylen-diamin und 3,5-Diethyl-2,6-toluylendiamin und primäre mono-, di-, tri- oder tetraalkylsubstituierte 4,4'-Diaminodiphenylmethane oder Aminoalkohole wie Ethanolamin, 1-Aminopropanol, 2-Aminopropanol. Es können auch Gemische der oben genannten Kettenverlängerer eingesetzt werden. Daneben können auch kleinere Mengen an tri- oder höherfunktionellen Vernetzern zugesetzt werden, z.B. Glycerin, Trimethylolpropan, Pentaerythrit, Sorbit.

Weiterhin können in geringen Mengen auch übliche monofunktionelle Verbindungen eingesetzt werden, z.B.

als Kettenabbrecher oder Entformungshilfen. Beispielhaft genannt seien Alkohole wie Oktanol und Stearylalkohol oder Amine wie Butylamin und Stearylamin.

Die molaren Verhältnisse der Aufbaukomponenten können über einen breiten Bereich variiert werden, wodurch sich die Eigenschaften des Produkts einstellen lassen. Bewährt haben sich molare Verhältnisse von Polyolen zu Kettenverlängerern von 1:1 bis 1:12. Das Molverhältnis von Diisocyanaten und Polyolen beträgt bevorzugt 1,2:1 bis 30:1. Besonders bevorzugt sind Verhältnisse von 2:1 bis 12:1. Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, daß das Äquivalenzverhältnis von NCO-Gruppen zur Summe der NCO-reaktiven Gruppen, insbesondere der Hydroxy- oder Aminogruppen der niedermolekularen Diole/Triole, Amine und der Polyole 0,9:1 bis 1,2:1, vorzugsweise 0,98:1 bis 1,05:1, besonders bevorzugt 1,005:1 bis 1,01:1 beträgt.

Die im Verfahren eingesetzten Polyurethane können ohne Katalysatoren hergestellt werden; in manchen Fällen kann der Einsatz von Katalysatoren jedoch angezeigt sein. Im allgemeinen werden die Katalysatoren in Mengen von bis zu 100 ppm, bezogen auf die Gesamtmenge an Edukten, verwendet. Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren. Bevorzugt sind Dibutylzinndiacetat und Dibutylzinndilaurat; von diesen genügen meist Mengen von 1 bis 10 ppm, um die Reaktion zu katalysieren.

Neben den TPU-Komponenten und den Katalysatoren können auch andere Hilfsmittel und Zusatzstoffe zugesetzt werden. Soweit diese beim Extraktionsprozeß nicht aus dem Material herausgelöst werden, kann man sie vor der Extraktion zusetzen; ansonsten wird man sie zweckmäßigerweise erst nach dem Extraktionsschritt hinzufügen. Genannt seien beispielsweise Gleitmittel wie Fettsäureester, deren Metallseifen. Fettsäureamide und Siliconverbindungen, Antiblockmittel, Inhibitoren. Stabilisatoren gegen Hydrolyse, Licht, Hitze und Verfärbung, Flammschutzmittel, Farbstoffe. Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag. München 1989, oder DE-A 29 01 774.

Der Aufbau der im Verfahren einsetzbaren TPU kann in einem Schritt nach dem sogenannten one-shot-Verfahren erfolgen oder schrittweise nach dem sogenannten Prepolymerverfahren. Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Die nach dem Verfahren erhaltenen TPU können nach üblichen Verfahren wie Extrusion oder Spritzgießen zu Formkörpern, Schläuchen oder Folien verarbeitet werden. Diese sind stippenfrei, flexibel, kleben nicht und können problemlos nach den gängigen Verfahren sterilisiert werden.

Es ist auch möglich, die nach dem Verfahren erhaltenen TPU in Lösung zu bringen und dann aus Lösung zu verarbeiten, beispielsweise durch Tauchen, Gießen oder Koagulation. Als Lösungsmittel eignen sich beispielsweise Chloroform, Dimethylformamid, Dimethylacetamid. N-Methylpyrrolidon oder Mischungen von Toluol und Isopropanol.

## Beispiele

## Beispiel 1 (Vergleich)

In einem 6l-Planschliffkolben mit Rührer, Thermometer und Rückflußkühler wurden 2880 g (1,373 mol) Polytetrahydrofuran mit einem mittleren Molekulargewicht von 2000 g/mol vorgelegt und bei 120°C / 1,4 x $10^4$ Pa (14 mbar) 1 Stunde lang getrocknet. Dann wurden 0,13 g Dibutylzinnlaurat als Katalysator und 1528,9 g (5,829 mol) $H_{12}$MDI zugegeben und es wurde bei 120°C bis zum Erreichen eines NCO-Wertes von 8,5 Gew.-% gerührt. In dieses Prepolymer wurden als Kettenverlängerer 391,1 g (4,341 mol) 1,4-Butandiol eingerührt. Nach ca. 60 Sekunden wurde die Reaktionsmischung auf ein beschichtetes Blech gegossen, wo es nach wenigen Minuten erstarrte. Zur Vervollständigung der Reaktion wurde 12 Stunden lang bei 100°C nachgetempert.

Die ausreagierten Platten wurden zerschnitten und zerkleinert. Das Häckselgranulat wurde auf einem Zweiwellen-Brabender-Meßextruder extrudiert und stranggranuliert. Für die Zell- und Blutverträglichkeitstests wurden aus dem Zylindergranulat 80 x 1 mm Rundplatten spritzgegossen und Schläuche mit 3 mm Innendurchmesser extrudiert.

**Beispiel 2**

1,5 kg des Zylindergranulats aus Beispiel 1 wurden in eine Soxhlet-Hülse gefüllt und 24 Stunden lang mit siedendem Ethanol extrahiert. Anschließend wurde das Granulat getrocknet und zu Spritzgußplatten verarbeitet. Die durch Entfernen des Lösungsmittels aus dem Extrakt gewonnenen Rückstände wurden ebenfalls dem Zellverträglichkeitstest unterzogen.

**Beispiel 3**

1,5 kg des Zylindergranulats aus Beispiel 1 wurden in eine Soxhlet-Hülse gefüllt und 24 Stunden lang mit siedendem Aceton extrahiert. Anschließend wurde das Granulat getrocknet und zu Spritzgußplatten und Schläuchen mit 3 mm Innendurchmesser verarbeitet. Die durch Entfernen des Lösungsmittels aus dem Extrakt gewonnenen Rückstände wurden ebenfalls dem Zellverträglichkeitstest unterzogen.

**Beispiel 4 (Vergleich)**

Entsprechend Beispiel 1 wurden aus 2135,0 g (1,011 mol) eines Polyesters aus Adipinsäure und Ethylenglykol mit einem mittleren Molekulargewicht von 2158 g/mol, 1131,5 g (4,314 mol) $H_{12}$MDI, 0,12 g Dibutylzinnlaurat sowie 291,9 g (3,239 mol) 1,4-Butandiol ein TPU hergestellt und zu Zylindergranulat verarbeitet. Für die Zell- und Blutverträglichkeitstests wurden aus dem Zylindergranulat 80 x 1 mm Rundplatten spritzgegossen.

**Beispiel 5**

1,5 kg des Zylindergranulats aus Beispiel 4 wurden in eine Soxhlet-Hülse gefüllt und 24 Stunden lang mit siedendem Aceton extrahiert. Anschließend wurde das Granulat getrocknet und zu Spritzgußplatten verarbeitet.

**Beispiel 6 (Vergleich)**

Entsprechend Beispiel 1 wurden aus 2880 g (0,77 mol) eines bifunktionellen hydroxylterminierten Polybutylens mit einem mittleren Molekulargewicht von 3740 g/mol, 1488 g (5,672 mol) $H_{12}$MDI, 0,48 g Dibutylzinnlaurat sowie 432,1 g (4,796 mol) 1,4-Butandiol ein TPU hergestellt und zu Zylindergranulat verarbeitet. Für die Zell- und Blutverträglichkeitstests wurden aus dem Zylindergranulat 80 x 1 mm Rundplatten spritzgegossen.

**Beispiel 7**

1,5 kg des Zylindergranulats aus Beispiel 6 wurden in eine Soxhlet-Hülse gefüllt und 24 Stunden lang mit einer siedenden Mischung aus Aceton und Hexan im Verhältnis 1:1 extrahiert. Anschließend wurde das Granulat getrocknet und zu Spritzgußplatten verarbeitet.

**Zellverträglichkeitstests**

Die Zellverträglichkeitsuntersuchungen wurden an Mäusefibroblasten der Zellinie L 929 durchgeführt. Die Zellkulturen wurden bis zum Erreichen eines vorgegebenen Reifestadiums und einer vorgegebenen Anzahl von Zellen angezüchtet. Dann wurden eine Spritzgußplatte und eine Glasplatte als Referenzprobe zugegeben ('direkter Kontakt') oder der wäßrige Extrakt einer Spritzgußplatte zugesetzt ('indirekter Kontakt') und die Zellkultur weitere 24 Stunden lang bebrütet.
Die Auswertung verschiedener Parameter wie Morphologie, Zellausbreitung, Vitalität, DNS- und Proteingehalt und der Vergleich mit der Referenzprobe läßt erkennen, ob das Material eine wachstumshemmende (Anzahl der Zellen geringer als bei der Referenzprobe) oder sogar zelltoxische (Anzahl der Zellen kleiner als zu Versuchsbeginn) Wirkung zeigt. Die Ergebnisse wurden mit Schulnoten von 1 bis 6 bewertet, wobei die Ergebnisse der Tests mit indirektem Kontakt doppelt so stark gewichtet wurden wie die der Tests mit direktem Kontakt. Die erhaltenen Werte sind in Tabelle 1 zusammengefaßt.

Tabelle 1:

| Ergebnisse der Zellverträglichkeitstests | | | |
|---|---|---|---|
| | Direkter Kontakt | Indirekter Kontakt | Gesamturteil |
| Beispiel 1 Vergleich | 5 | 4 | 4 |
| Beispiel 2 | 4 | 3 | 3 |
| Beispiel 2 Extrakt | 5 | 5 | 5 |
| Beispiel 3 | 3 | 2 | 2 |
| Beispiel 3 Extrakt | 5 | 5 | 5 |
| Beispiel 4 Vergleich | 5 | 2 | 3 |
| Beispiel 5 | 1 | 1 | 1 |
| Beispiel 6 Vergleich | 5 | 5 | 5 |
| Beispiel 7 | 3 | 2 | 2 |

## Dynamische in-vitro-Blutverträglichkeitstests

Für die Charakterisierung der in-vitro-Thrombogenität der Polymeroberflächen im Blutkontakt wurde frisch entnommenes menschliches Vollblut mit Citrat oder Hirudin versetzt, um die Gerinnung zu unterdrücken. Nachdem ein Schlauch aus dem zu prüfenden Material mit Blut gefüllt und die Schlauchenden verbunden worden waren, wurde der Schlauchring für eine vorgegebene Zeit auf eine vertikal mit konstanter Drehzahl rotierende Trommel gespannt.

Zur Beurteilung der Blutverträglichkeit wurden verschiedene Blutgerinnungsfaktoren aus unterschiedlichen Stadien der Gerinnungskaskade, Blutplättchen, sowie weiße und rote Blutkörperchen bestimmt und nach folgendem Score-Punktesystem bewertet: Kontaktaktivierung 0-5 Punkte, Fibrinogen-Fibrin-Umwandlung 0-10 Punkte, Thrombinaktivierung 0-10 Punkte, Fibrinolyse 0-5 Punkte, Hämolyse 0-10 Punkte, Proteolyse 0-10 Punkte, Plättchenaktivierung 0-10 Punkte. Maximal konnten 60 Punkte erreicht werden; je geringer die erzielte Punktezahl, desto besser die Blutverträglichkeit. Die Ergebnisse der Untersuchungen sind in Tabelle 2 zusammengefaßt.

Tabelle 2:

| In-vitro-Blutverträglichkeit | | |
|---|---|---|
| | Beispiel 1 Vergleich | Beispiel 3 |
| Kontaktaktivierung | 3 | 0 |
| Fibrinogen-Fibrin-Umwandlung | 4 | 2 |
| Thrombinaktivierung | 5 | 0 |
| Fibrinolyse | 4 | 3 |
| Hämolyse | 0 | 0 |
| Proteolyse | 1 | 0 |
| Plättchenaktivierung | 0 | 0 |
| Gesamtsumme | 18 | 5 |

## Patentansprüche

1. Verwendung biologisch verträglicher thermoplastischer Polyurethane, die durch im Prinzip bekannte Verfahren hergestellt und einer Extraktion mit einem organischen Lösungsmittel mit anschließender Abtrennung und Entfernung des Lösungsmittels unterzogen worden sind, zur Herstellung medizinischer Artikel.

**Claims**

**1.** The use of biologically compatible thermoplastic polyurethanes, which have been produced by a method which is known in principle and which have been subjected to extraction with an organic solvent with subsequent separation and removal of the solvent, for the production of medical articles.

**Revendications**

**1.** Utilisation de polyuréthanes thermoplastiques biocompatibles préparés par des procédés connus en principe et soumis à une extraction par un solvant organique suivie d'une séparation et d'une élimination du solvant pour la fabrication d'articles à usage médical.